# EUROPEAN PATENT SPECIFICATION

(11) **EP 3 468 781 B1**
(45) Date of publication and mention of the grant of the patent: **03.08.2022**
(21) Application number: 16728952.9
(22) Date of filing: 14.06.2016
(51) Int. Cl.: B29C 70/86, B29C 70/32

(54) **A CONNECTION STRUCTURE OF A WIND TURBINE BLADE AND METHOD FOR ITS MANUFACTURE**
VERBINDUNGSSTRUKTUR EINER WINDTURBINENSCHAUFEL UND VERFAHREN ZU DEREN HERSTELLUNG
STRUCTURE DE RACCORDEMENT D'UNE PALE D'ÉOLIENNE ET PROCÉDÉ POUR SA FABRICATION

(43) Date of publication of application: 17.04.2019
(73) Proprietor: Nordex Blade Technology Centre APS, 5771 Stenstrup (DK)
(72) Inventor: SØRENSEN, Flemming, 5700 Svendborg (DK); HORNEMANN, Jesper, 5792 Aarslev (DK)
(74) Representative: Hauck Patentanwaltspartnerschaft mbB
(86) International application number: PCT/EP2016/063588
(87) International publication number: WO 2017/215735

(56) References cited:
- EP-A1- 2 781 344
- EP-A2- 0 227 570
- WO-A2-2012/140039
- FR-A- 1 116 181

## Description

The present invention relates to a connection structure with embedded inserts for a wind turbine blade, such as but not limited to a root end of a wind turbine blade.

Connection structures for wind turbine blades allow a wind turbine blade to be connected to the hub of the wind turbine, or, if the blade needs to be manufactured in more than one part, the joining of such parts. Wind turbine blades are generally made by laminates of fibre reinforced cured resins, which themselves are not well suited for the connection, so one approach in the prior art is to embed inserts in the form of metal bushings at an end face of the wind turbine blade. These bushings extend perpendicular to the end face and longitudinally in the general direction of the blade. The bushings typically comprise a cylindrical part with an at least partially threaded axial bore in an end face perpendicular to the longitudinal axis of the cylindrical part. The other end of the bushing typically comprises a part with a taper.

Examples of this prior art approach is *inter alia* found in WO2004/110862, WO2012/140039 and EP2952735.

In WO2004/110862 a foam holding means with circular recesses is provided on an outer layer of fibre reinforced resin. The circular recesses are lined with a number of layers of fibre reinforced resin. The inserts are placed in the lined recesses and further layers of fibre reinforced layers are placed on top of the inserts so as to embed them. The entire aggregate of fibre reinforced layers, foam holding means and inserts are then compressed and the resin cured so that a laminate with embedded inserts is formed. This ensures a good contact between the fibre reinforced layers and the inserts. The fibre reinforced layers may be pre-preg or they may be laid up dry and infused by the resin.

In WO2004/110862 quite a lot of space is provided between the inserts. If the inserts are placed closer together it may not be so easy to actually place the further layers in good contact with the inserts in the space between them. A typical approach is to provide pre-fabricated spacers, e.g. made by pultrusion, in the gaps between the inserts. This however entails the risk that any remaining gaps between inserts and the spacers do not contain a proper amount of reinforcement fibres, and thus are weaker than intended. This is evidently undesirable, in particular as this part basically carries the entire load from the blade.

Apart from the fact that WO2012/140039 does not use a foam holding means, it still deals with such spacers. In order to ensure that fibres are present in the above-mentioned gaps between the inserts and the spacers, the inserts are covered partially in metal fibres, such as a metal wool layer, in the form of sleeves around the cylindrical part. How, exactly the covering is to be performed and by which method is not detailed. When the laminate is formed by infusion with resin and curing of the composite a bond is formed between the metal wool layer and the insert.

Furthermore, EP2952735 suggests an insert with longitudinal grooves in order to increase the bonding surface of the insert. To get good contact to the bonding surface a weave with rowings of fibre is used to place the rowings in the grooves. Weaves are generally not desired in fibre reinforced composites as undulations will weaken the strength of the fibres. Furthermore, care has to be taken that the rowing follow the length of the grooves as otherwise further undulations will occur. Also, the provision of the grooves increases the manufacturing cost for inserts substantially.

From EP 2 781 344 A1 an insert with the features of the preamble of claim 8 has become known.

FR 1 116 181 A discloses an elongated part which comprises a fibre mat having a predetermined shape, wherein the fibre mat is rolled up to a coil having a taper and a thickness decreasing towards a distal end of the part.

On this background it is a first object of the invention to provide an improved method for manufacture of a connection structure of a wind turbine blade, a connection structure for wind turbine blade and a wind turbine blade with such a connection structure.

It is a second object to provide an improved wrapped insert for manufacturing such a connection structure.

It is a third object to provide an improved method for manufacturing a spacer to be placed in the gap between the inserts of such a connection structure.

It is a fourth object to provide an improved spacer to be placed in the gap between the inserts of such a connection structure.

According to a first aspect of the invention the first object is achieved by a method for manufacturing a connection structure of a wind turbine blade part, said method comprising the steps of providing an elongate insert with a predetermined length, said insert comprising at least one cylindrical part and one tapered part where the at least one cylindrical part comprises an end face from which a centrally arranged threaded bore extends towards the tapered part, providing a fibre mat of a predetermined shape which at least in one direction is longer than the predetermined length of said elongate insert, wrapping said elongate insert in said fibre mat, embedding said wrapped elongate insert between further layers of fibre mat of said connection structure, impregnating the fibre mat layers with curable resin, and curing the resin.

By wrapping the elongate insert in the fibre mat this way it is ensured that the inner layers, and hence the fibres therein are in good contact with the elongate insert and no undesired gaps with too much resin and too little fibre are formed. Moreover, wrapping the inserts can easily be done manually and well in advance of the placement in the connection structure. That is to say personnel may spend their time wrapping the inserts for the next connection structure while the mould is occupied by a current connection structure, e.g. during the curing thereof.

According to a second aspect of the invention, the second object is achieved by a wrapped insert for the manufacturing of a connection structure of a wind turbine blade part, said wrapped insert comprising an elongate insert with a predetermined length, said elongate insert having at least one cylindrical part and one tapered part, where the at least one cylindrical part comprises an end face from which a centrally arranged threaded bore extends towards the tapered part, and a fibre mat of a predetermined shape which at least in one direction is longer than the predetermined length of said elongate insert, where said fibre mat is wrapped around said elongate insert.

Wrapping the insert in this way is advantageous in that it is a simple way of ensuring good contact between the fibres and the insert, i.e. the desired high concentration of fibres in the adhesion zone between the resin matrix and the surface of the insert. Moreover, the wrapping may be performed in a simple manner and prior to or in parallel with other manufacturing processes. Typically, there is only a small number of moulds in which the connection structures and/or the blades are made one after the other. Wrapping the inserts may be performed while the mould is occupied by the curing of a previous connection structure or blade, and less layers of mat as compared to the prior art would have to be laid up in the mould once it is vacant again, thus saving time. The wrapping is a simple process which may be performed by the same persons as will lay up the mats in the mould, and these would then be - at least in part, occupied by the wrapping, while the connection structure or blade is curing. Furthermore, wrapping the fibre mats around the insert reduces the number of layers that have to laid up in the mould prior to the placement of the inserts, in turn reducing the time needed from the mould becomes vacant until the inserts are in place.

According to a third aspect, the third object is achieved by a method for manufacturing an elongate spacer adapted to be placed in a gap between inserts of a connection structure of a wind turbine blade part, said method comprising the steps of providing a fibre mat of a predetermined shape, and rolling said fibre mat into a coil shape. Such spacers are simple to manufacture, and would unlike the above mentioned pultruded spacers not need very specialized equipment. Basically a tabletop of suitable surface area would do. Rolling the spacers may be performed while the mould is occupied by the curing of a previous connection structure or blade. The rolling is a simple process which may be performed by the same persons as will lay up the mats in the mould, and these persons would then be - at least in part, occupied by the rolling of the spacers, while the connection structure or blade is curing. Like the wrapped inserts these spacers may be prepared in advance so as to be ready at the time of the placement of the inserts, in turn reducing the time needed from the mould becomes vacant until the inserts are in place. Not needing any specialize equipment, the spacers are also substantially cheaper to manufacture than the above mentioned prior art pultruded spacers. As compared to e.g. a pultruded spacer, as typically used in the prior art, the costs would be cut substantially. Furthermore, because the spacers are simple wound or rolled coils, and not pre-cured, they may, unlike the before mentioned pultruded spacers, be deformed when they are inserted into the gaps between the wrapped inserts. They will thus get into good contact with the fibres of the wrapped inserts, and the risk that areas with a low concentration of fibres may occur, is reduced. This is advantageous over rigid prior art spacers, e.g. manufactured by pultrusion or other pre-cured fibre reinforced composites, because this will ensure good contact between the fibres in the mats wrapped around the inserts and mats of the spacer, thus ensuring the desired high proportion of fibres in resin matrix between the spacer and the insert.

According to a fourth aspect the fourth object is achieved by an elongate spacer adapted to be placed in a gap between inserts of a connection structure of a wind turbine blade part wherein the spacer comprises a wound fibre mat.

Because the spacers are simple wound coils, and not pre-cured, they may, unlike rigid prior art spacers, e.g. manufactured by pultrusion or other pre-cured fibre reinforced composites, be deformed when they are inserted into the caps between the wrapped inserts. This will ensure good contact between the fibres in the mats wrapped around the inserts and mats of the spacer, thus ensuring the desired high proportion of fibres in resin matrix between the spacer and the insert. This is because the spacer is deformable and thus may be pressed into and filling the gap between two wrapped inserts entirely. The risk that areas with a low concentration of fibres may occur is thus reduced. Moreover, as mentioned above, such a spacer is easily manufactured and does not require specialized equipment like the above mentioned pultruded spacers. Basically all that is needed is a table top with sufficient surface area, allowing the fibre mat to be wound into a coil. Like the wrapped inserts these spacers may be prepared in advance so as to be ready at the time of the placement of the inserts, in turn reducing the time needed from the mould becomes vacant until the inserts are in place. Not needing any specialized equipment, the spacers are also substantially cheaper to manufacture than the above mentioned prior art pultruded spacers. Moreover, the spacers may be manufactured by the same persons as will lay up the mats in the mould, and these persons would then be - at least in part, occupied by the rolling of the spacers, while the connection structure or blade is curing, i.e. while the mould is occupied by the curing of a previous connection structure or blade. As compared to e.g. a pultruded spacer, as typically used in the prior art, the costs would be cut substantially.

According to a first preferred embodiment according to the first aspect of the invention, the impregnation of the fibre mats takes place in situ. In situ impregnation or infusion of fibre mats is generally cheaper than using pre-impregnated mats, commonly referred to as pre-preg.

According to another preferred embodiment according to the first aspect of the invention, the fibre mats comprises non-crimp fabric, preferably a stitched fibre mat and most preferably a uni-axial stitched fibre mat. Such mats present good mechanical strength in the desired directions of the connection structure.

According to a further preferred embodiment according to the first aspect of the invention, the predetermined shape of the fibre mat and the elongate insert is wrapped in such a way as to leave only said end face of the elongate insert exposed. Thus, a good fibre contact is established between the entire surface of elongate insert except the end face, which is to be engaged by a matching surface, e.g. of a hub, bearing ring or of another blade part.

According, to yet a further preferred embodiment according to the first aspect of the invention, the method further comprises the step of placing a spacer in a gap between two wrapped inserts prior to the infusion and/or curing. This allows the spacer to be pressed into contact with the wrapped inserts and slightly deform these prior to infusion and/or curing, in turn allowing good contact between the spacer and the fibres enveloping he wrapped inserts, i.e. reducing the risk of undesired gaps with too much resin and too little fibre being formed are formed between the inserts and the spacers. This is in particular the case when the spacer is provided in accordance with the third and fourth aspect of the invention, where the spacer is also deformable, and may thus be deformed into the gap prior to infusion.

According to a further preferred embodiment according to the first aspect of the invention, the elongate insert is provided as several parts. This allows the use of cheaper and more light-weight materials with lower mechanical strength for some parts, and stronger and typically heavier and more expensive materials for other parts. In particular, the cylindrical part in which the threaded bore is provided at the end face may comprise steel, whereas the opposite tapered part may comprise a synthetic foam material.

According to a particular preferred embodiment according to the first aspect of the invention, the wrapping comprises winding or rolling the fibre mat around the elongate insert. In this way the sheet formed by the fibre mat may simply be placed flat on a suitable surface such as a tabletop, upon which the insert is rolled over the fibre mat in order to form a coil around the insert. At the tapered end the fibre mat, i.e. in the non-cylindrical part of the insert, the mat may then subsequently be pressed flat against the taper to ensure good contact. The cylindrical surface is generally smooth and it is therefore not difficult to achieve a good contact between the fibre mat and this part of the surface directly during the rolling motion when the insert is wrapped.

The number of turns will depend on the size of the insert, the connection structure, of the thickness of the sheet of fibre mat, etc. According to a preferred embodiment of the first aspect of the invention, however, the winding of the fibre mat around the elongate insert comprises more than 1 turn, preferably 5 to 20, more preferred 5 to 10. Obviously the number of turns need not be an integer but may be any number which belongs to the set of real numbers.

According to a first preferred embodiment according to the second aspect of the invention, the fibre mat comprises non-crimp fabric, preferably a stitched fibre mat and most preferably a uni-axial stitched fibre mat. Such mats present good mechanical strength in the desired directions of the connection structure. This is suitable for infusion and cheaper than pre-preg. However, as an alternative another preferred embodiment according to the second aspect of the invention, the fibre mat may instead comprise a pre-impregnated fibre mat.

According to another preferred embodiment according to the second aspect of the invention, only said end face of the elongate insert is exposed. Thus, a good fibre contact is established between the entire surface of elongate insert except the end face, which is to be engaged by a matching surface, e.g. of a hub or of another blade part.

According to yet another preferred embodiment according to the second aspect of the invention, the elongate insert is provided as several parts. This allows the use of cheaper and more light-weight materials with lower mechanical strength for some parts, and stronger and typically heavier and more expensive materials for other parts. In particular, the cylindrical part in which the threaded bore is provided at the end face may comprise steel, whereas the opposite tapered part may comprise a synthetic foam material.

According to the third aspect, said fibre mat has a shape providing the wound elongate spacer with a taper at one end. This is a simple way to provide a spacer with a taper matching the taper of the wrapped insert.

According to another embodiment of the third aspect, said fibre mat has a shape providing the wound elongate spacer with a cylindrical part. This allows the shape of the spacer to match a corresponding cylindrical part of the wrapped insert in a parallel manner, thus ensuring good contact between the fibres of the two.

According to a further preferred embodiment of the third aspect the fibre mat comprises non-crimp fabric, preferably a stitched fibre mat and most preferably a uni-axial stitched fibre mat. Such mats present good mechanical strength in the desired directions of the connection structure. This is suitable for infusion and cheaper than pre-preg. However, as an alternative another preferred embodiment according to the third aspect of the invention, the fibre mat may instead comprise a pre-impregnated fibre mat.

According to yet a further embodiment of the third aspect the fibre mat is wrapped around a core. Having a core, in particular a core comprising a cylinder, substantially facilitates the wrapping, as the spacer may then be wound in basically the same manner as described above in conjunction with the wrapped insert.

According to the fourth aspect of the invention, the elongate spacer comprises a taper towards one end. This is easily manufactured with the method according to the third aspect and provides a spacer which may match the wrapped insert according to the first and second aspects of the invention.

According to another embodiment, the elongate spacer comprises a generally cylindrical part. This allows the shape of the spacer to match a corresponding cylindrical part of the wrapped insert in a parallel manner, thus ensuring good contact between the fibres of the two.

According to a further preferred embodiment, the fibre mat comprises non-crimp fabric, preferably a stitched fibre mat and most preferably a uni-axial stitched fibre mat. Such mats present good mechanical strength in the desired directions of the connection structure. This is suitable for infusion and cheaper than pre-preg. However, as an alternative another preferred embodiment the fibre mat may instead comprise a pre-impregnated fibre mat.

The present invention will now be described in greater detail based on non-limiting exemplary embodiments, and with reference to the drawing on which:
Fig. 1 shows a schematic end view of a segment of a connection structure made according to the invention,
Fig. 2 schematically shows a wrapped insert according to the invention,
Fig. 3 schematically shows the wrapping of an insert according to the invention,
Fig. 4 schematically shows the manufacture of spacer according to the invention,
Figs. 5a to 5h schematically shows various predetermined shapes that may be used for wrapping the inserts or rolling the spacers according to the invention.

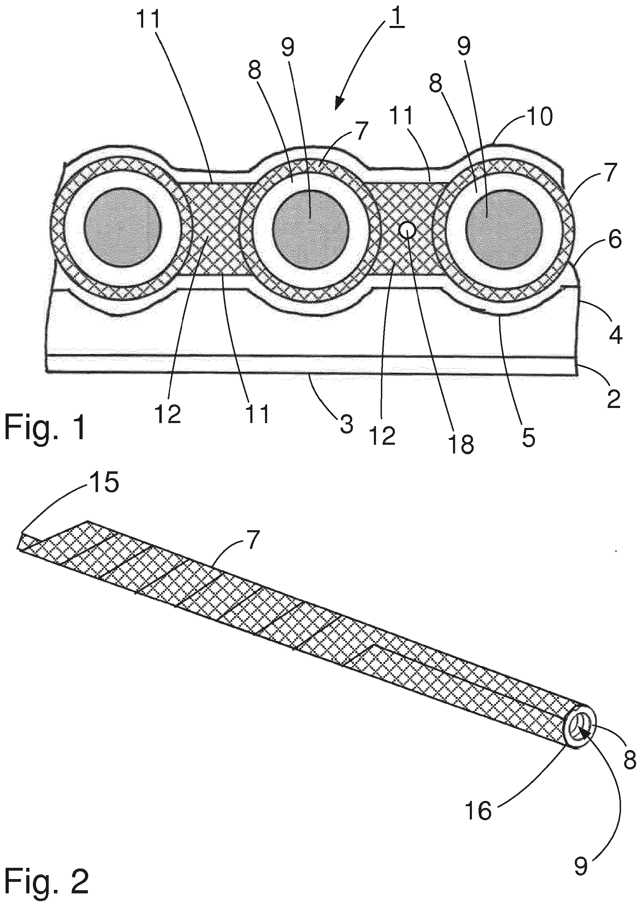

Turning first to Fig. 1 a schematic end view of a segment of a connection structure 1 according to the invention is shown. The connection structure 1 could be a root end of a wind turbine blade to be connected to the hub of a wind turbine or it could be an interface for connecting one wind turbine blade part to another if the wind turbine blade is too long to be manufactured and/or transported in one part. It is emphasized that the view is schematic and *inter alia* does not show any of the curvature that a normally circular root end would have.

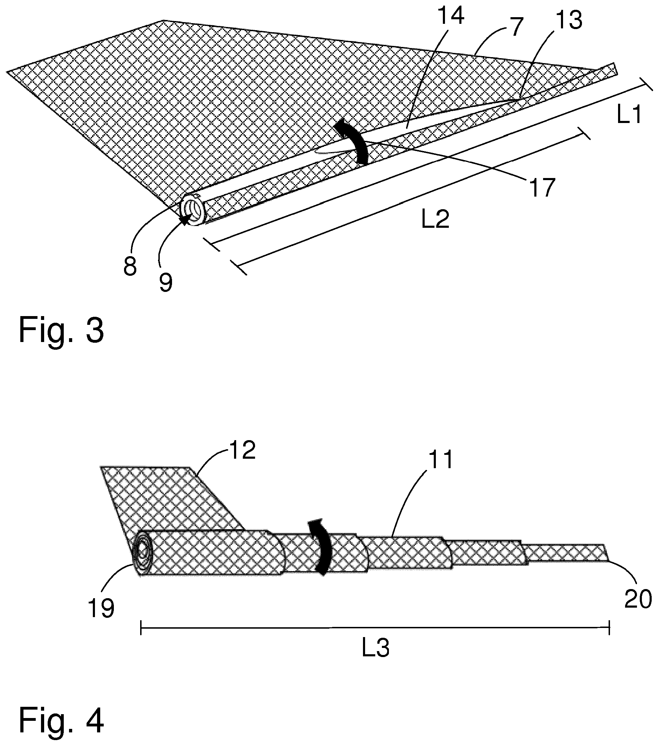

The connection structure 1 comprises a base 2 forming the outer surface 3 of the wind turbine blade. This base 2 may comprise several layers of fibre mat laminated together in synthetic resin. The fibre mats may be pre-preg or infused with the resin forming the matrix of the resulting fibre reinforced composite. On the base 2 a holder 4 with recesses 5 is provided. This holder 4 may be of foam as it is known from WO2004/110862 or any other suitable material. On top of and in good engagement with the holder 4 and therefore also in good engagement in the recesses 5 at least one but preferably more layers of fibre mats 6 are provided. This is also known per se in the prior art of WO2004/110862. However, according to the invention, the overall thickness of the fibre mats 6 and hence the number of layers of fibre mats that need to be laid up in the mould during manufacture may be reduced as compared to WO2004/110862. Rather than adding further layers of fibre mat to increase the thickness and thus the strength of the connection structure 1, the next layers are provided as layers of fibre mat 7 wrapped around the insert 8. As can be seen the inserts 8 are in the form of bushings with a central bore 9 with a thread (not visible). The thread may be a partial thread, i.e. not covering the entire length of the bore 9. Providing these next layers 7 as layers of fibre mat 7 wrapped around the inserts 8 also reduces the thickness of the top layers 10 because less is needed to provide the necessary strength. During manufacture this saves time because a smaller number of layers 6 and 10 are to be laid up on top of each other, and because the layers of fibre mat 7 wrapped around the inserts 8 may be provided in advance. If the layers of fibre mat 7 wrapped around neighbouring inserts 8 do not abut, spacers 11 may optionally be provided to fill the gap. These spacers 11 may be of the rigid type known from the prior art, but are preferable provided in accordance with the invention as deformable spacers 11, as will be explained below in conjunction with Fig 4.

Turning now to Fig. 2 an insert 8 wrapped in fibre mat 7 is shown. The insert 8 is wrapped almost entirely in the fibre mat 7 leaving only the end face with the central threaded bore 9 naked, so as to ensure good contact between the end face and the external part to which it is later to be bolted in conventional manner by bolts engaging the thread in the bores 9. As can be seen by comparison with Fig. 3 this almost total wrapping is achieved by the fibre mat 7 having a dimension L1 in one direction that exceeds the length L2 of the insert 8. As can also be seen from Fig. 3, distal end 13 of the insert, i.e. the end opposite the proximal end face with the threaded bore 9, is cut at an oblique angle so as to provide a taper 14 towards the distal end 13. As can be seen from fig. 2, the fibre mat 7 is thus flattened at the distal end 15 of the wrapping, and thus wider in the lateral direction. Accordingly, the gap between neighboring wraps of fibre mat 7 on respective neighboring inserts 8 will be smaller at the distal end 15 than at the proximal end 16. As will be explained later, this resulting taper of the gap may be taken into account by the spacers 11.

The elongate inserts 8 may be provided as one single integral piece, e.g. of steel, or they may be provided as parts forming together the insert 8, e.g. a light and less strong foam part for the tapered part 14 and a heavier and more strong part, made of e.g. steel for the cylindrical end part with the end faces and the threaded bores 9.

Wrapping the fibre mat 7 around the inserts 8 is quite easily performed and does not require any specialized equipment. Basically a fibre mat 7 cut to a predetermined desired shape is placed flat on a flat surface, such as a tabletop. The insert 8 is then placed adjacent a predetermined first edge of the mat 7 and rolled over the fibre mat 7 as indicated by the arrow 17 in order to wind the mat 7 in a coil around the insert 8. This is pretty much in the same process as rolling a beeswax candle around a wig, and may easily be performed manually. After rolling or winding the coil, the coil is pressed into engagement with the oblique surface of the taper 14, flattened along taper 14 and beyond the distal end 13. This is also easily performed manually. Along the cylindrical part of the insert 8 the good contact is almost automatically achieved in the rolling motion when winding the fibre mat 7 around the insert 8. In the embodiment illustrated in Fig 2, the coil comprises a little more than eight turns. The number of turns depends on the size of the inserts 8 and the connection structure 1 in general, but also, of course, on the thickness of the fibre mats 7 used. Typically, the fibre mats 7 used will have a fibre content in the range of 600 g/m² to 1600 g/m², and usually in the range of 800 g/m² to 1200 g/m². The fibre mats 7 may be pre-preg but are preferably dry mats to be infused or impregnated in situ in the mould when the connection structure 1 is manufactured. If nothing else is stated, infusion and impregnation are used as synonyms. The number of turns should be more than 1, and normally be in the range of 5 to 20 or 5 to 10. As will be evident from Fig. 2, the number of turns needs not be an integer. The mats 7 are preferably non-crimp fabric and preferably uni-axial. In general, and in particular in the latter case, the mats 7 are cut to the predetermined shape, so that the direction of the fibres in the mats 7 are generally arranged in parallel with longitudinal axis the insert 8, i.e. in parallel with the axis of the threaded bore 9, once the fibre mat 7 has been wound around the insert 8. The fibres are preferably of glass, but other materials such as aramid or carbon would also be useful. Steel or other metals or alloys are possible but not preferred for fatigue reasons.

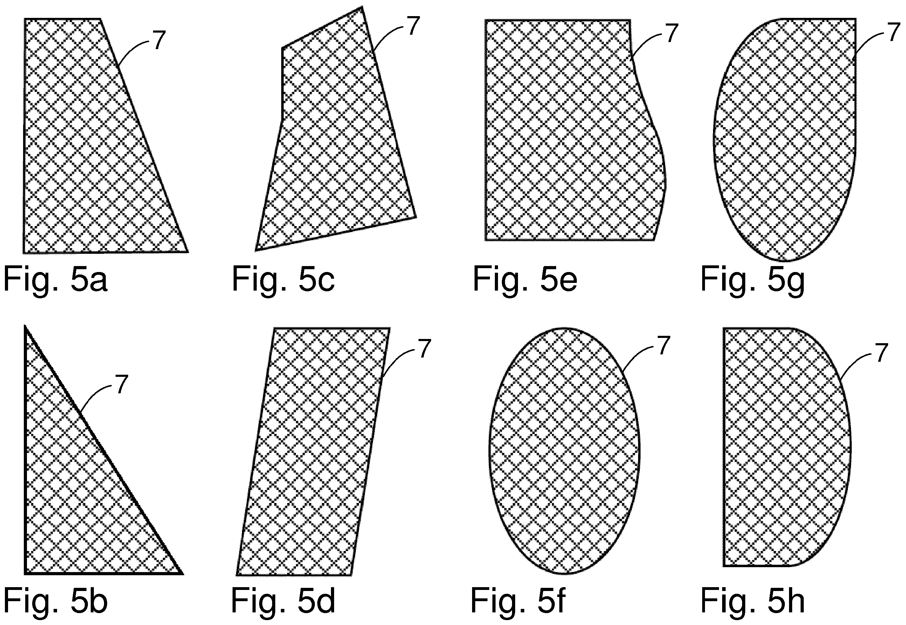

Though a general taper and thickness reduction of the wrapping itself from the proximal end 16 towards distal end 15 is desired, there may be situations where deviations could be made. One such situation could be where room for other types of embedded parts in addition to the inserts 8 that provide the mounting bushings in the present invention is needed. Figs. 5a to 5h show possible configurations of predetermined shapes of the fibre mat 7 in their non-wound condition. Fig. 5a corresponds to the shape of fibre mat 7 used in Figs. 2 and 3. Fig. 5d is for inserts 8 where the cylindrical part flares out or otherwise increases diameter towards the proximal end around the threaded bore 9. Other geometries could be devised for taking into account further embedded parts in the connection structure 1.

Turning now to Fig. 4, a spacer forming 11 part of the inventive concept is disclosed. As can be seen by comparison between Figs. 3 and 4 the spacer 11 is rolled of fibre mats 12 in very much the same manner as the fibre mats 7 are wound around the insert bushing. However, it need not have any core but can simply be rolled up to a coil. Using a core 18 of e.g. foam or other light material is not excluded. In Fig. 1 the spacer 11 on the left hand side of the figure does not have a core, whereas the spacer on the right hand side has a small cylindrical core. As can be seen in Fig. 1 the spacer 11 has been strongly deformed from the quasi-cylindrical cross section achieved by the rolling or the winding around the cylindrical core 18. Accordingly, the skilled person would understand that a core with other cross-section than circular, e.g. rectangular, square or elliptical, could also be used in order to provide a cross section better matching the gap between the wrapped inserts 8 in which the spacer is to be placed. In any case, because neither fibre mat 12 of the rolled spacers 11 nor the fibre mat 7 of the wrapped inerts 8 is cured, both are readily deformable in to good engagement with each other leaving no gap in which a low concentration of fibre and an excessive concentration of matrix resin would be present.

The fibre mats 12 used for the spacer preferably correspond to the ones of the wrapped inserts 8. That is to say, the fibre mats 12 used will typically have a fibre content in the range of 600 g/m² to 1600 g/m², and usually in the range of 800 g/m² to 1200 g/m². The fibre mats 12 may be pre-preg but are preferably dry mats to be infused in situ in the mould when the connection structure 1 is manufactured. At least some of the geometries or predetermined shapes of Figs 5a-5h could be used. It will be understood that in the example of Fig. 4, a shape generally according to Fig. 5a is used, albeit in smaller dimensions than used for wrapping the insert 8, i.e. so that L3 shorter than L1. As for the wrapped inserts 8, the other predetermined shapes *inter alia* may provide room for other embedded parts. The number of turns should be more than 1, and normally be in the range of 5 to 20 or 5 to 10. As will be evident from Fig. 4, the number of turns needs not be an integer. The fibre mats 12 are preferably non-crimp fabric and preferably uni-axial. In general, and in particular in the latter case, the fibre mats 12 are cut to the predetermined shape, so that the direction of the fibres in the mats 12 are generally arranged in parallel with longitudinal axis of the rolled spacer 11, e.g. of the cylindrical core 18, if applicable. As mentioned, the overall length L3 of the spacers 11 from the proximal end 19 to the distal end 20 would normally be shorter than the length L1 of the wrapped insert 8 so as to fit in the gap between two neighboring wrapped inserts 8, which as explained above is narrower at the distal end 15 thereof, because the wrapping is flattened.

When in the above the term cylindrical or quasi-cylindrical is used it is to be understood that this is in the situation as-made for the spacers 11 and the relevant parts of the wrapped inserts, and not in an in-use situation, i.e. before they are intentionally deformed. For all practical purposes the rolled or wound spacers will comprise a cylindrical part, which is academically seen only quasi-cylindrical because there will be a discontinuity of the surface of the wrapping where the outer turn of fibre mat 7, 12 ends. Likewise, the taper will not be gradual but also, at least academically seen have discontinuities from the proximal end 19 of the spacer 11 to the distal end 20, and likewise from the proximal end 16 of the wrapped insert 8 to the distal end 15 thereof.

Both the spacer 11 and the wrapped insert comprise only a single mat cut to shape, but evidently they could comprise several, adjacent or on top of each other. This would further facilitate the embedding of further parts in the connection structure 1.

Having provided the wrapped inserts 8 and if applicable the deformable spacers 11, the connection structure 1 may be provided by laying up the connection structure parts as disclosed above. The connection structure 1 would then be completed in a conventional manner by curing under low pressure. If, as preferred, the some of the layers of fibre mats 3, 5, 6, 7, 10, 12 as applicable are infused in situ this is of course performed prior to the curing, as it is well known in the art.

The skilled person will know that deviations and variant may of the invention may be provided without deviating from the general scope of the invention as defined in the appended claims. In particular, variations in shapes and dimensions of the fibre materials and the inserts may be made. Likewise, choice of materials for the fibres, the foam, the inserts etc. may deviate from the examples.

## Claims

1. A method for manufacturing a connection structure (1) of a wind turbine blade, said method comprising the steps of
providing an elongate insert (8) with a predetermined length (L2), said insert (8) comprising at least one cylindrical part and one tapered part where the at least one cylindrical part comprises an end face from which a centrally arranged threaded bore (9) extends towards the tapered part,
providing a fibre mat (7) of a predetermined shape which at least in one direction is longer than the predetermined length (L2) of said elongate insert (8),
wrapping said elongate insert (8) in said fibre mat (7) such that the wrapping has a general taper and a thickness of the wrapping decreases from a proximal end (16) towards a distal end (15) of the wrapped insert,
embedding said wrapped elongate insert between further layers of fibre mat of said connection structure (1),
impregnating the fibre mat layers with curable resin, and
curing the resin.

2. A method according to claim 1, wherein the impregnation of the fibre mats takes place in situ.

3. A method according to any one of the preceding claims, wherein the fibre mats comprise non-crimp fabric, preferably a stitched fibre mat and most preferably a uni-axial stitched fibre mat.

4. A method according to any one of the previous claims wherein the elongate insert (8) is wrapped in the fibre mat (7) in such a way as to leave only said end face of the elongate insert (8) exposed.

5. A method according to any one of the previous claims further comprising placing a spacer (11) in a gap between two wrapped inserts prior to the curing step.

6. A method according to any one of the previous claims, wherein the elongate insert (8) is provided as several parts.

7. A method according to any one of the previous claims wherein the wrapping comprises winding the fibre mat (7) around the elongate insert (8), wherein the winding of the fibre mat (7) around the elongate insert (8) preferably comprises more than 1 turn, more preferably 5 to 20, most preferred 5 to 10.

8. A wrapped insert for manufacturing a connection structure (1) of a wind turbine blade part, said wrapped insert comprising
an elongate insert (8) with a predetermined length (L2), said elongate insert (8) having at least one cylindrical part and one tapered part,
wherein the at least one cylindrical part comprises an end face from which a centrally arranged threaded bore (9) extends towards the tapered part, and
a fibre mat (7) of a predetermined shape which at least in one direction is longer than the predetermined length (L2) of said elongate insert (8), **characterized in that** said fibre mat (7) is wrapped around said elongate insert (8) such that
a thickness of the wrapping decreases from a proximal end (16) towards a distal end (15) of the wrapped insert.

9. A wrapped insert according to claim 8, wherein the fibre mat (7) comprises non-crimp fabric, preferably a stitched fibre mat and most preferably a uni-axial stitched fibre mat, or wherein the fibre mat (7) comprises a pre-impregnated fibre mat.

10. A wrapped insert according to claim 8 or 9, wherein only said end face of the elongate insert (8) is exposed.

11. A wrapped insert according to any one of claims 8 to 10, wherein the elongate insert (8) is provided as several parts.

12. A method for manufacturing a connection structure (1) of a wind turbine blade part, said method comprising the steps of
manufacturing an elongate spacer (11) by providing a fibre mat (12) and rolling said fibre mat (12) into a coil shape, wherein the fibre mat (12) has a shape providing the wound elongate spacer (11) with a taper at one end, and
placing the elongate spacer (11) in a gap between inserts of the connection structure (1).

13. A method according to claim 12, wherein said fibre mat (12) has a shape providing the wound elongate spacer (11) with a cylindrical part.

14. A method according to claim 12 or 13, wherein the fibre mat (12) comprises non-crimp fabric, preferably a stitched fibre mat and most preferably a uni-axial stitched fibre mat, or wherein the fibre mat (12) comprises a pre-impregnated fibre mat.

15. A method according to any one of claims 12 to 14 where the fibre mat (12) is wrapped around a core, wherein the core preferably comprises a cylinder.

16. A connection structure (1) of a wind turbine blade part comprising an elongate spacer (11) placed in a gap between inserts, **characterized in that** the elongate spacer (11) comprises a fibre mat (12) having a predetermined shape, wherein the fibre mat (12) is rolled up to a coil having a general taper and a thickness decreasing from a proximal end (19) towards a distal end (20) of the elongate spacer (11).

17. A connection structure (1) according to claim 16, wherein the elongate spacer (11) comprises a generally cylindrical part.

18. A connection structure (1) according to claim 16 or 17, wherein the fibre mat (12) comprises non-crimp fabric, preferably a stitched fibre mat and most preferably a uni-axial stitched fibre mat, or wherein the fibre mat (12) comprises a pre-impregnated fibre mat.

## Patentansprüche

1. Verfahren zur Herstellung einer Verbindungsstruktur (1) eines Windenergieanlagenrotorblatts, wobei das Verfahren die Schritte umfasst
- Bereitstellen eines länglichen Inserts (8) mit einer vorbestimmten Länge (L2), wobei das Insert (8) mindestens einen zylindrischen Teil und einen sich verjüngenden Teil umfasst, wobei der mindestens eine zylindrische Teil eine Stirnfläche umfasst, von der aus eine mittig angeordnete Gewindebohrung (9) sich zum konischen Teil hin erstreckt,
- Bereitstellen einer Fasermatte (7) einer vorbestimmten Form, die zumindest in einer Richtung länger ist als die vorbestimmte Länge (L2) des langgestreckten Inserts (8),
- Einwickeln des länglichen Inserts (8) in die Fasermatte (7), so dass die Umhüllung eine allgemeine Verjüngung aufweist und eine Dicke der Umhüllung von einem proximalen Ende (16) zu einem distalen Ende (15) des umhüllten Einsatzes abnimmt,
- Einbetten des umhüllten länglichen Inserts zwischen weiteren Schichten von Fasermatten der Verbindungsstruktur (1),
- Imprägnieren der Fasermattenschichten mit härtbarem Harz und Aushärten des Harzes.

2. Verfahren nach Anspruch 1, wobei die Imprägnierung der Fasermatten in situ stattfindet.

3. Verfahren nach einem der vorhergehenden Ansprüche, wobei die Fasermatten Gelege umfassen, vorzugsweise eine vernähte Fasermatte, am bevorzugtesten eine unidirektional vernähte Fasermatte.

4. Verfahren nach einem der vorhergehenden Ansprüche, wobei das längliche Insert (8) derart in die Fasermatte (7) eingewickelt ist, dass nur die Endfläche des langgestreckten Inserts (8) offen bleibt.

5. Verfahren nach einem der vorhergehenden Ansprüche, weiter umfassend das Platzieren eines Abstandshalters (11) in einer Lücke zwischen zwei umhüllten Inserts vor dem Härtungsschritt.

6. Verfahren nach einem der vorhergehenden Ansprüche, wobei das langgestreckte Insert (8) mehrteilig ist.

7. Verfahren nach einem der vorhergehenden Ansprüche, wobei die das Einwickeln das Wickeln der Fasermatte (7) um das längliche Insert (8) umfasst, wobei das Wickeln der Fasermatte (7) um den länglichen Einsatz (8) vorzugsweise mehr als 1 Windung, mehr bevorzugt 5 bis 20, am meisten bevorzugt 5 bis 10 umfasst.

8. Umhülltes Insert zum Herstellen einer Verbindungsstruktur (1) eines Windenergieanlagenrotorblatts, wobei das umhüllte Insert umfasst
- ein längliches Insert (8) mit einer vorbestimmten Länge (L2), wobei das längliche Insert (8) mindestens einen zylindrischen Teil und einen sich verjüngenden Teil umfasst, wobei der mindestens eine zylindrische Teil eine Endfläche umfasst, von der aus sich eine mittig angeordnete Gewindebohrung (9) in Richtung des sich verjüngenden Teils erstreckt, und
- eine Fasermatte (7) mit einer vorbestimmten Form, die zumindest in einer Richtung länger als die vorbestimmte Länge (L2) des länglichen Inserts (8) ist, **dadurch gekennzeichnet, dass** die Fasermatte (7) um das längliche Insert (8) gewickelt ist, so dass eine Dicke der Umhüllung von einem proximalen Ende (16) hin zu einem distalen Ende (15) des umwickelten Inserts abnimmt.

9. Umhülltes Insert nach Anspruch 8, wobei die Fasermatte (7) ein Gelege, vorzugsweise eine vernähte Fasermatte und am bevorzugtesten eine unidirektional vernähte Fasermatte umfasst, oder wobei die Fasermatte (7) eine vorimprägnierte Fasermatte umfasst.

10. Umhülltes Insert nach Anspruch 8 oder 9, wobei nur die Stirnfläche des langgestreckten Inserts (8) freiliegt.

11. Umhülltes Insert nach einem der Ansprüche 8 bis 10, wobei das langgestreckte Insert (8) mehrteilig ist.

12. Verfahren zum Herstellen einer Verbindungsstruktur (1) eines Windenergieanlagenrotorblatts, wobei das Verfahren die Schritte umfasst
- Herstellen eines länglichen Abstandshalters (11) durch Bereitstellen einer Fasermatte (12) und Rollen der Fasermatte (12) in eine Spulenform, wobei die Fasermatte (12) eine Form hat, die den gewickelten länglichen Abstandshalter (11) mit einer Verjüngung an einem Ende versieht und
- Anordnen des langgestreckten Abstandshalters (11) in einer Lücke zwischen Inserts der Verbindungsstruktur (1).

13. Verfahren nach Anspruch 12, bei dem die Fasermatte (12) eine Form aufweist, die den gewickelten länglichen Abstandshalter (11) mit einem zylindrischen Teil versieht.

14. Verfahren nach Anspruch 12 oder 13, wobei die Fasermatte (12) Gelege umfasst, vorzugsweise eine vernähte Fasermatte und am meisten vorzugsweise eine unidirektional vernähte Fasermatte, oder wobei die Fasermatte (12) eine vorimprägnierte Fasermatte umfasst.

15. Verfahren nach einem der Ansprüche 12 bis 14, wobei die Fasermatte (12) um einen Kern gewickelt ist, wobei der Kern vorzugsweise einen Zylinder umfasst.

16. Verbindungsstruktur (1) eines Windenergieanlagenrotorblattteils, umfassend einen langgestreckten Abstandshalter (11), der in einem Spalt zwischen Inserts angeordnet ist, **dadurch gekennzeichnet dass** der langgestreckte Abstandshalter (11) eine Fasermatte (12) mit einer vorgegebenen Form umfasst, wobei die Fasermatte (12) zu einer Spule aufgerollt ist, die eine allgemeine Verjüngung aufweist und eine Dicke, die von einem proximalen Ende (19) zu einem distalen Ende (20) des länglichen Abstandshalters (11) abnimmt.

17. Verbindungsstruktur (1) nach Anspruch 16, wobei der langgestreckte Abstandshalter (11) einen im Wesentlichen zylindrischen Teil umfasst.

18. Verbindungsstruktur (1) nach Anspruch 16 oder 17, wobei die Fasermatte (12) aus Gelege besteht, vorzugsweise aus einer vernähten Fasermatte (15) und am bevorzugtesten aus einer unidirektional vernähten Fasermatte, oder wobei die Fasermatte (12) aus einer vorimprägnierten Fasermatte besteht.

## Revendications

1. Procédé de fabrication d'une structure de raccordement (1) d'une pale d'éolienne, ledit procédé comportant les étapes de
fourniture d'un insert (8) allongé avec une longueur prédéterminée (L2), ledit insert (8) comportant au moins une partie cylindrique et une partie effilée, la au moins une partie cylindrique comportant une face d'extrémité à partir de laquelle un alésage fileté (9) agencé centralement s'étend vers la partie effilée,
fourniture d'un tapis de fibres (7) d'une forme prédéterminée qui, au moins dans une direction, est plus long que la longueur prédéterminée (L2) dudit insert (8) allongé, enveloppement dudit insert (8) allongé dans ledit tapis de fibres (7), de sorte que l'enveloppement ait un effilement général et qu'une épaisseur de l'enveloppement diminue, d'une extrémité proximale (16) vers une extrémité distale (15) de l'insert enveloppé,
incorporation dudit insert allongé enveloppé entre d'autres couches de tapis de fibres de ladite structure de raccordement (1),
imprégnation des couches de tapis de fibres avec une résine durcissable et durcissement de la résine.

2. Procédé selon la revendication 1, dans lequel l'imprégnation des tapis de fibres a lieu in situ.

3. Procédé selon l'une quelconque des revendications précédentes, dans lequel les tapis de fibres comprennent un tissu sans ondulation, de préférence un tapis de fibres cousu et, le plus préférablement, un tapis de fibres cousu uni-axial.

4. Procédé selon l'une quelconque des revendications précédentes, dans lequel l'insert (8) allongé est enveloppé dans le tapis de fibres (7), de manière à laisser uniquement ladite face d'extrémité de l'insert (8) allongé exposée.

5. Procédé selon l'une quelconque des revendications précédentes, comportant en outre le placement d'une entretoise (11) dans un espace entre deux inserts enveloppés, avant l'étape de durcissement.

6. Procédé selon l'une quelconque des revendications précédentes, dans lequel l'insert (8) allongé est prévu sous forme de plusieurs parties.

7. Procédé selon l'une quelconque des revendications précédentes, dans lequel l'enveloppement comporte l'enroulement du tapis de fibres (7) autour de l'insert (8) allongé, dans lequel l'enroulement du tapis de fibres (7) autour de l'insert (8) allongé comporte de préférence plus d'un tour, davantage de préférence de 5 à 20, le plus préférablement de 5 à 10.

8. Insert enveloppé pour fabriquer une structure de raccordement (1) d'une partie de pale d'éolienne, ledit insert enveloppé comportant
un insert (8) allongé avec une longueur prédéterminée (L2), ledit insert (8) allongé ayant au moins une partie cylindrique et une partie effilée,
dans lequel la au moins une partie cylindrique comporte une face d'extrémité à partir de laquelle un alésage fileté (9) agencé centralement s'étend vers la partie effilée et un tapis de fibres (7) d'une forme prédéterminée qui, au moins dans une direction, est plus long que la longueur prédéterminée (L2) dudit insert (8) allongé, **caractérisé en ce que** ledit tapis de fibres (7) est enveloppé autour dudit insert (8) allongé, de sorte que
une épaisseur de l'enveloppement diminue, d'une extrémité proximale (16) vers une extrémité distale (15) de l'insert enveloppé.

9. Insert enveloppé selon la revendication 8, dans lequel le tapis de fibres (7) comporte un tissu sans ondulation, de préférence un tapis de fibres cousu et, le plus préférablement, un tapis de fibres cousu uni-axial ou dans lequel le tapis de fibres (7) comporte un tapis de fibres pré-imprégné.

10. Insert enveloppé selon la revendication 8 ou 9, dans lequel seule ladite face d'extrémité de l'insert (8) allongé est exposée.

11. Insert enveloppé selon l'une quelconque des revendications 8 à 10, dans lequel l'insert (8) allongé est prévu sous forme de plusieurs parties.

12. Procédé de fabrication d'une structure de raccordement (1) d'une partie de pale d'éolienne, ledit procédé comportant les étapes de
fabrication d'une entretoise (11) allongée par fourniture d'un tapis de fibres (12) et roulement dudit tapis de fibres (12) en une forme de bobine, dans lequel le tapis de fibres (12) a une forme fournissant à l'entretoise (11) allongée enroulée un effilement à une extrémité et
placement de l'entretoise (11) allongée dans un espace entre des inserts de la structure de raccordement (1).

13. Procédé selon la revendication 12, dans lequel ledit tapis de fibres (12) a une forme fournissant à l'entretoise (11) allongée enroulée une partie cylindrique.

14. Procédé selon la revendication 12 ou 13, dans lequel le tapis de fibres (12) comporte un tissu sans ondulation, de préférence un tapis de fibres cousu et, le plus préférablement, un tapis de fibre cousu uni-axial ou dans lequel le tapis de fibres (12) comporte un tapis de fibres pré-imprégné.

15. Procédé selon l'une quelconque des revendications 12 à 14, le tapis de fibres (12) étant enveloppé autour d'un noyau, dans lequel le noyau comporte de préférence un cylindre.

16. Structure de raccordement (1) d'une partie de pale d'éolienne comportant une entretoise (11) allongée placée dans un espace entre des inserts, **caractérisée en ce que** l'entretoise (11) allongée comporte un tapis de fibres (12) ayant une forme prédéterminée, dans laquelle le tapis de fibres (12) est enroulé en bobine ayant un effilement général et une épaisseur diminuant d'une extrémité proximale (19) vers une extrémité distale (20) de l'entretoise (11) allongée.

17. Structure de raccordement (1) selon la revendication 16, dans laquelle l'entretoise (11) allongée comporte une partie généralement cylindrique.

18. Structure de raccordement (1) selon la revendication 16 ou 17, dans laquelle le tapis de fibres (12) comporte un tissu sans ondulation, de préférence un tapis de fibres cousu et, le plus préférablement, un tapis de fibres cousu uni-axial ou dans laquelle le tapis de fibres (12) comporte un tapis de fibres pré-imprégné.
